Europäisches Patentamt

European Patent Office

Office européen des brevets

(19)

(11) Numéro de publication: **0 364 022**

**A1**

(12) **DEMANDE DE BREVET EUROPEEN**

(21) Numéro de dépôt: 89202466.2

(22) Date de dépôt: 02.10.89

(51) Int. Cl.⁵: **H04L 12/28**

(30) Priorité: 07.10.88 FR 8813189

(43) Date de publication de la demande:
**18.04.90 Bulletin 90/16**

(84) Etats contractants désignés:
**DE FR GB**

(71) Demandeur: **TELECOMMUNICATIONS RADIOELECTRIQUES ET TELEPHONIQUES T.R.T.**
**88, rue Brillat Savarin**
**F-75013 Paris(FR)**

(84) **FR**

Demandeur: **N.V. Philips' Gloeilampenfabrieken**
**Groenewoudseweg 1**
**NL-5621 BA Eindhoven(NL)**

(84) **DE GB**

(72) Inventeur: **Grima, Jean-Claude**
**SOCIETE CIVILE S.P.I.D. 209 rue de l'Université**
**F-75007 Paris(FR)**
Inventeur: **Bretez, Gabriel**
**SOCIETE CIVILE S.P.I.D. 209 Rue de l'Université**
**F-75007 Paris(FR)**

(74) Mandataire: **Pyronnet, Jacques et al**
**Société Civile S.P.I.D. 209 rue de l'Université**
**F-75007 Paris(FR)**

(54) Dispositif de recalage d'informations pour transmettre dans des multiplex temporels sortants des informations provenant de multiplex temporels entrants asynchrones.

(57) Le système de communication comporte p boucles à p multiplex temporels de même configuration, prévus pour des canaux CI à cadence rapide et CS à cadence lente. Selon l'invention, p entrées de données ($E_1$ et $E_4$) du dispositif de recalage sont reliées chacune à un SRI (synchronisation) dont les sorties scnt reliées en parallèle à un CII (commutation pour canaux CI) et à un RCIS (recalage et commutation pour canaux CS). Les sorties homologues de CII et RCIS sont reliées par paires, par l'intermédiaire d'un circuit de combinaison (61 à 64) aux sorties (S1 à S4) du dispositif de recalage.

Application aux réseaux locaux de communication.

FIG.6

# Dispositif de recalage d'informations pour transmettre dans des multiplex temporels sortants des informations provenant de multiplex temporels entrants asynchrones

La présente invention concerne un dispositif de recalage d'informations dans un système de communication à p boucles pour émettre dans une pluralité de p multiplex temporels sortants du dispositif des informations provenant d'une pluralité de p multiplex temporels entrants asynchrones, lesdits p multiplex temporels, identiques quant à leur configuration étant prévus pour des canaux à cadence rapide CI et des canaux à cadence lente CS, les canaux CI étant formés d'espaces de temps repérés dans une trame de base, tandis que les canaux CS sont formés d'espaces de temps distribués dans des trames de base successives et repérés dans une multitrame englobant une pluralité de trames de base, dispositif de recalage d'informations comportant p entrées de données des multiplex entrants E1, E2,..., Ep et p sorties de données S1, S2,...,Sp des multiplex sortants.

La présente invention s'applique à un réseau local, à savoir une installation de communications numériques incluant de la phonie, des communications téléphoniques notamment, et des transmissions de données ; elle peut être utilisée dans des entreprises telles que des bureaux, des usines ou analogues ou à bord de bateaux et permet de réduire considérablement les quantités de câbles nécessaires, tout en permettant la transmission simultanée d'un grand nombre de communications indépendantes.

On connaît, notamment du brevet français 2 526 614 au nom de la demanderesse, un système de communication à multiplex temporel comportant une seule boucle fermée. Ce système permet, avec une technologie classique et une vitesse du multiplex modérée de mettre en série dans la boucle une centaine d'unités de raccordement appelées aussi concentrateurs, chaque concentrateur étant relié à une quinzaine d'abonnés, ce qui convient pour environ 1500 à 2000 utilisateurs raccordés au système. Si le nombre d'utilisateurs dépasse 2000, se pose alors le problème technique général de l'augmentation de capacité du système. On peut, entre autres solutions possibles, résoudre ce problème en modifiant l'architecture du système.

L'invention concerne précisément un système à plusieurs boucles qui traversent toutes un organe central appelé superpilote.

Cette solution, adoptée pour augmenter la capacité du réseau local, présente l'avantage de pouvoir conserver les mêmes caractéristiques, pour les multiplex temporels utilisés dans les différentes boucles, que celles du multiplex sur une seule boucle ; les concentrateurs peuvent aussi rester les mêmes, ce qui permet une extension de capacité très facile d'un système à boucle unique, d'abord par adjonction de concentrateurs à tel ou tel emplacement désiré de la boucle puis par adjonction de boucle(s) supplémentaire(s) et d'un superpilote.

Le problème technique précis qui se pose dans un tel système multiboucle est de permettre à n'importe quel utilisateur du système de communiquer avec n'importe quel autre utilisateur ou de pouvoir faire de la téléconférence et ceci en augmentant aussi peu que possible le temps de transit des informations entre utilisateurs.

Selon l'invention, les problèmes techniques indiqués ci-dessus sont résolus grâce au fait que le dispositif de recalage d'informations indiqué au premier paragraphe est remarquable en ce que les p entrées de données sont reliées chacune à un organe SRI de synchronisation des p multiplex entrants et de recalage des informations des canaux CI, que les p sorties F des organes SRI sont reliées en parallèle à p entrées d'un organe CII de commutation interboucle pour les canaux CI muni d'une première matrice de commutation, et à p entrées d'un organe RCIS de recalage et de commutation interboucle pour les canaux CS muni d'organes de retard et d'une deuxième matrice de commutation, et que p sorties d'informations de l'organe CII sont appariées respectivement à p sorties d'informations de l'organe RCIS, chaque paire de sorties respectives étant reliée à une première et une deuxième bornes d'entrée d'un circuit de combinaison, à raison de p circuits de combinaison qui fournissent à leurs sortie S1, S2,..., Sp, lesdits p multiplex sortants en synchronisme.

L'idée de base de l'invention consiste, dans un premier temps à rendre synchrones les multiplex entrants qui se présentent aux entrées du dispositif avec des décalages dans le temps différents puis à transmettre à des organes séparés en vue de la ou des configuration(s) de boucle(s) désirée(s) d'une part l'information relative aux canaux d'information proprement dits, d'autre part l'information relative aux canaux de signalisation qui sont en même temps recalés.

On notera que le recalage des canaux CI qui sont les canaux d'information à cadence rapide est effectué en tête du dispositif, par les organes SRI. Lorsqu'une configuration de commutation, dans l'organe CII interconnecte plusieurs boucles, par exemple 3 boucles, avec des décalages dans le temps pour ce qui est de la fermeture et de l'ouverture des 3 interrupteurs concernés, il est ainsi créé provisoirement une longue boucle, constituée de ces trois boucles élémentaires, à travers laquelle le recalage du canal CI est effectué trois fois successivement par 3 organes SRI différents, ce qui triple la durée du recalage d'information par rapport à celle d'une boucle unique. Pour une durée de recalage d'information élémentaire égale à une trame de base, par exemple 250 μs, ceci est tout à fait tolérable, dans la mesure où le nombre de boucles élémentaires à interconnecter reste faible, ce qui est le cas général. Par contre, la durée de recalage des signaux CS est longue, de préférence égale à la durée de la multitrame et par exemple égale à 64 ms pour un système à boucle unique. Il n'est pas souhaitable d'augmenter cette durée, à l'occasion d'une interconnection entre plusieurs boucles élémentaires, sous peine de faire apparaître des phénomènes d'échos pour les postes d'utilisateurs mis en relation sur la longue boucle créée par la configuration d'interconnexion précitée.

Pour s'affranchir de la contrainte mentionnée au paragraphe précédent, un mode de réalisation avantageux de l'invention est remarquable en ce que chacune des p entrées dudit organe RCIS de recalage et de commutation interboucle pour les canaux CS est reliée à une ligne qui comporte p organes de retard en série, et que la sortie de chaque organe de retard est reliée à une colonne de ladite deuxième matrice de commutation dont chaque ligne est reliée à l'une des p sorties de RCIS.

Avec cette structure pour l'organe RCIS il est ainsi possible, pour un système à 4 boucles par exemple de moduler par pas de 0,25 ; 0,5 ; 0,75, la durée de recalage de canal CS par boucle élémentaire et de faire en sorte que, pour une configuration multiboucle pour un canal de signalisation multiboucle donné, configuration qui est répartie dans le temps quant à la fermeture-ouverture des interrupteurs de la matrice concernés, le cumul des retards introduits pour le recalage des canaux CS des boucles élémentaires soit égal au retard pour une boucle unique, soit la durée de la multitrame. Dans ce cas, les numéros d'ordre des canaux CS dans les différentes boucles élémentaires constituant la boucle multiple sont nécessairement différents, ce qui n'introduit par ailleurs pas de difficulté d'acheminement du canal de signalisation de la multiboucle considérée.

Selon un mode de réalisation préféré de l'invention, les organes CII et RCIS sont gérés à partir de moyens de commande constitués par une mémoire de commutation qui valide en lecture les configurations de commutation de leur matrice de commutation. A cet effet chacune de ces deux mémoires est inscrite à partir d'un bus d'adresses et d'un bus de données reliés à un microprocesseur central disposé dans le superpilote. La mémoire de commutation pour l'organe CII est lue à partir d'un compteur de canaux CI et celle pour l'organe RCIS, à partir d'un compteur de canaux CS, chaque configuration de commutations interboucle de signalisation étant répartie dans le temps sur la durée d'une multitrame par rapport aux multiplex des différentes boucles de la configuration interboucle.

La description qui suit en regard des dessins annexés, le tout donné à titre d'exemple fera bien comprendre comment l'invention peut être réalisée.

Les figures 1a et 1b représentent l'organisation d'un multiplex temporel, la figure 1a montrant l'ensemble du multiplex et la figure 1b la trame de base.

La figure 2 est un schéma synoptique d'un dispositif de recalage du multiplex, connu, sur une boucle unique.

Les figures 3 et 4 sont des diagrammes de temps qui montrent en a le multiplex émis et en b le multiplex reçu et qui permettent d'expliciter le recalage de l'information et le recalage de la signalisation respectivement pour une boucle unique.

La figure 5 représente un réseau à 4 boucles qu'il est possible d'interconnecter selon l'invention, dans un dispositif central appelé superpilote.

La figure 6 est le schéma synoptique général du dispositif d'interconnexion de boucles selon l'invention.

La figure 7 représente la structure d'un organe de Synchronisation et de Recalage d'Information, SRI.

La figure 8 est le schéma synoptique du Commutateur Interboucle d'Information, CII.

La figure 9 est le schéma synoptique du Commutateur Interboucle de Signalisation RCIS qui effectue en concomitance le Recalage de la signalisation.

Les figures 10 et 11 sont des diagrammes de temps qui permettent d'expliciter le fonctionnement des organes CII et RCIS respectivement.

La figure 12 représente un réseau multiboucle à haute sécurité, comportant trois superpilotes.

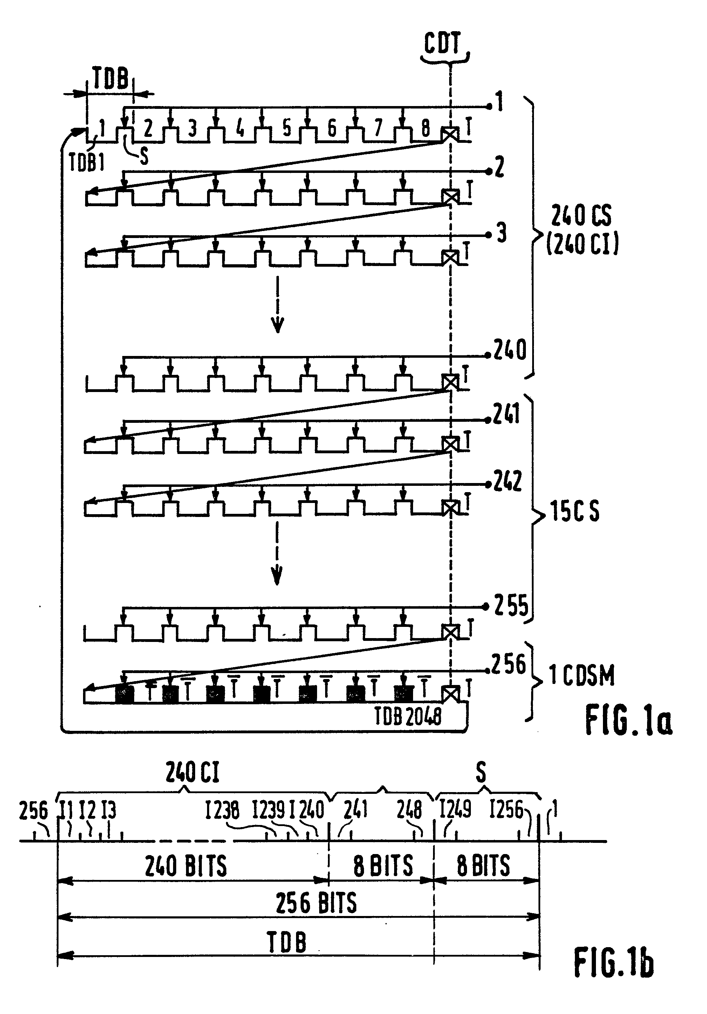

Les figures 1a et 1b représentent l'organisation d'un multiplex temporel présentant deux sortes de canaux, à cadence rapide et à cadence lente respectivement.

Les canaux à cadence rapide, qui sont destinés pour l'essentiel à la transmission d'information proprement dite (canaux d'information CI) sont constitués par des espaces de temps I1, I2, I3,...,I240, voir figure 1b qui représente la trame de base, TDB. Pour fixer les idées, ces intervalles de temps contiennent chacun un bit dont la durée est égale à 122 ns.

Les canaux à cadence lente (canaux de signalisation CS) sont constitués chacun par plusieurs espaces de temps S, séparés, situés chacun en fin de trame de base et après l'espace I248. Ces espaces de temps S contiennent 8 bits, référencés I249 à I256. Huit trames de base successives constituent une trame, en correspondance avec chaque ligne de la figure 1a. Le canal de signalisation CS1, à cadence lente, est formé de l'ensemble des espaces S des trames de base TDB1 à TDB7 ; le canal CS2, des espaces S des trames de base TDB9 à TDB15, etc... Les espaces de temps S des trames de base TDB8, TDB16,... TDB2048, c'est-à-dire les huit bits qui terminent chaque trame, contiennent le code de trame T utilisé pour définir les intervalles de temps I1, I2,... I240. Les intervalles S des trames de base TDB2041 à TDB2047, soit la dernière trame du multiplex, contiennent le code de multitrame $\overline{T}$, complémentaire du code T, qui permet de numéroter les différentes trames au nombre de 256, l'ensemble de ces trames constituant la multitrame dont la durée est par exemple égale à 64 ms. La constitution d'un canal de signalisation CS nécessite donc la succession de huit trames de base successives (une trame) quant à sa périodicité. La multitrame contient, parmi 256 canaux de signalisation, 240 canaux CS (CS1, CS2,..., CS240) réservés aux utilisateurs, en correspondance avec 240 canaux d'information CI de chaque trame de base (CI1, CI2,..., CI240). Les bits 241 à 248 de chaque trame de base sont des bits de tonalité qui ne jouent pas de rôle particulier pour la présente invention. De même, pour ne pas surcharger l'exposé, on n'explicite pas plus ici la nature des 15 canaux de même structure que les canaux CS de signalisation, 241,..., 255.

Pour faciliter la compréhension du système de communication multiboucle, on résume ci-dessous quelques caractéristiques du multiplex temporel choisi pour chaque boucle :
- Fréquence bit d'un canal d'information (cadence rapide) : 32 kbits/s
- Nombre de canaux d'information de base : 240
- Vitesses de transmission disponibles pour les utilisateurs (par association éventuelle de 2, 4, 8, 16 ou 32 CI adjacents : 32 ; 64, 128, 256, 512 ou 1024 kbits/s
- Vitesse de répétition du code de trame T : 4000/s
- Longueur du code de trame : 8 bits
- Fréquence bit moyenne d'un canal de signalisation à raison de 7 octets (56 bits) par trame : 875 bits/s
- Fréquence bit du multiplex : 8,192 MHz
- Durée de la multitrame : 64 ms
- Durée de la trame : 250 μs
- Durée d'un bit : 122 ns.

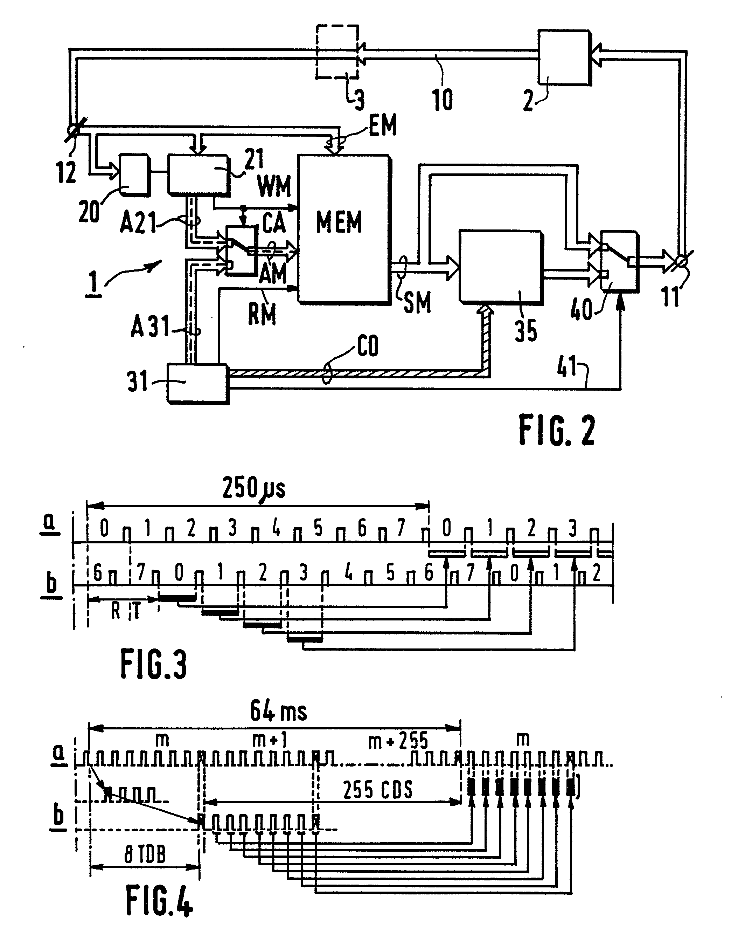

Lorsqu'on utilise un multiplex temporel (par exemple celui décrit ci-dessus) dans un système de télécommunication en boucle, par exemple à boucle unique, il est nécessaire de recaler l'information au moyen d'un dispositif de recalage d'information situé en un point de la boucle. Le système permet l'échange d'information entre différents circuits de raccordement (concentrateurs) 2, 3,..., figure 2, reliés par une ligne de transmission 10 (cable coaxial ou fibre optique), bouclée sur elle-même au moyen d'un dispositif de recalage qui reçoit le multiplex entrant déphasé de quelques bits et qui fournit le multiplex sortant recalé sur lui-même au moyen de retards appropriés, pour le multiplex entrant, distincts pour les canaux d'information CI et les canaux de signalisation CS.

La figure 2 montre de façon schématique un dispositif de recalage 1 connu qui permet de décaler le multiplex reçu sur la boucle 10 à la borne d'entrée 12 pour le faire à nouveau coïncider avec le multiplex à émettre à la borne de sortie 11. Un circuit d'horloge 20 restitue le rythme des informations apparaissant à la borne 12 et fournit ses signaux à un circuit de synchronisation 21 qui, en détectant les codes de trame T et de multitrame $\overline{T}$, élabore des signaux pour permettre l'inscription dans une mémoire MEM, de toutes les informations du multiplex entrant, successivement. Cette mémoire est munie d'une entrée de données EM connectée à l'entrée 12 et d'une sortie SM. La mémoire MEM reçoit aussi une commande d'écriture WM, un bus d'adresses AM et une commande de lecture RM.

Pour fixer le rythme du multiplex sortant (rythmes émission), il est prévu un circuit générateur de signaux d'horloge 31 muni d'un oscillateur à quartz. Ce circuit fournit les adresses et la commande de lecture RM de la mémoire MEM. Les adresses en écriture, respectivement en lecture sont véhiculées par des bus A21 et A31 issus des circuits 21 et 31. Ces bus transmettent un chiffre binaire modulo "256" qui évolue au rythme du multiplex entrant, respectivement au rythme du multiplex sortant. Un commutateur CA, commandé par le fil d'écriture WM de la mémoire MEM détermine lequel des codes d'adresse des bus A21 ou A31 est appliqué au bus d'adresses de la mémoire MEM.

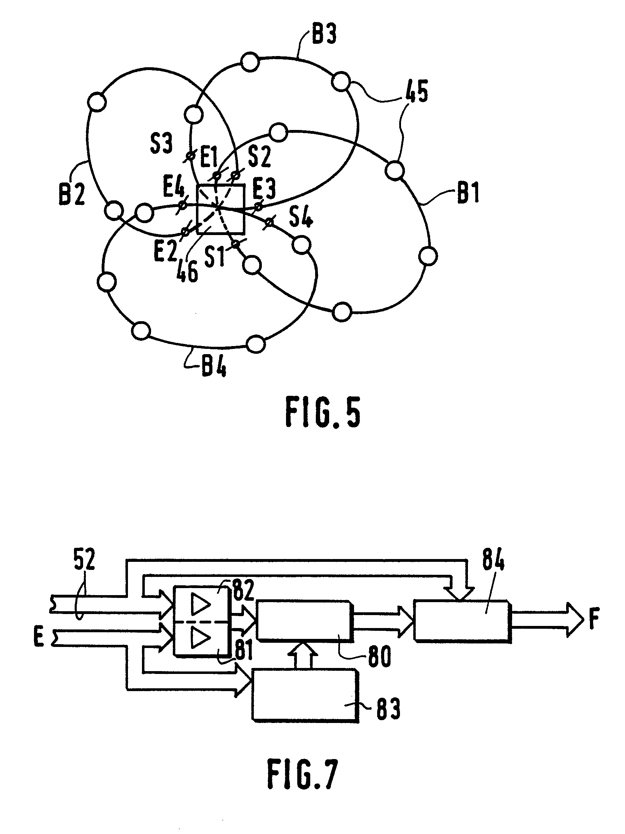

A la sortie SM est branché un organe de retard 35 qui sélectionne uniquement les bits du multiplex contenus dans les espaces de temps S et qui retarde ces bits de 16320 fois la durée moyenne d'apparition dans le multiplex des bits appartenant aux espaces S, soit encore la durée de 255 trames. Un circuit de combinaison (commutateur 40) permet, lorsqu'il est dans la position représentée sur la figure d'envoyer dans le multiplex sortant à la borne 11, au moins les informations des canaux CI, la borne 11 étant alors directement reliée à la sortie SM et, lorsqu'il est dans la position inverse, d'envoyer les informations des canaux de signalisation CS, plus les codes T et $\overline{T}$, dans le multiplex, la borne 11 étant alors reliée à la sortie de l'organe 35. La séquence de fonctionnement du commutateur 40 est commandée par un conducteur 41 porteur d'un signal d'horloge adéquat en provenance du générateur de signaux d'horloge d'émission 31. Ce qui vient d'être décrit permet d'effectuer de façon connue deux types de recalages pour la boucle 10, comme expliqué en référence aux figures 3 et 4,

- le recalage des informations, rapide,
- le recalage des signalisation, plus lent.

Sur les figures 3 et 4 on a représenté en a les multiplex émis et en b les multiplex reçus.

Le recalage des informations, voir figure 3, consiste à replacer les bits d'information reçus à leur rang précis dans les trames de base d'émission. A la figure 3, les 8 trames de base sont référencées 0 à 7. Le retard de transmission est référencé RT. Pour tenir compte d'un nombre important de concentrateurs dans la boucle 10, le recalage est réalisé sur 8 trames de base, soit une trame. Ceci signifie que le retard maximal admissible propre à la boucle est de 2048 bits, soit 250 $\mu$s. Par ailleurs, cette façon de faire montre, quel que soit le temps de transit des signaux multiplex dans la boucle avec le maximum précité, que le dispositif de recalage 1 déplace automatiquement les bits d'information reçus dans les canaux CI d'émission en correspondance avec les 8 trames de base suivantes. Ceci normalise par le fait, un retard de transmission d'information fixe pour la boucle complète, y compris la traversée du dispositif de recalage 1. En se référant à nouveau à la figure 2, on notera que la mémoire **MEM** vise, par sa capacité de stockage et ses séquences de lecture-écriture, à normaliser ce retard à la valeur fixe de 8 trames de base pour le multiplex temporel à travers toute la boucle.

Le recalage des signalisations (espaces de temps à cadence lente S distribués par octets), voir figure 4, permet de prélever, au moyen de l'organe de retard 35, le contenu des canaux de signalisation CS du multiplex reçu par le dispositif de recalage 1 pour les replacer, avec le même rang, dans la multitrame suivante du multiplex émis. On a vu ci-dessus que le recalage des informations permet de décaler tout le multiplex reçu d'une quantité constante égale à la durée d'une trame, soit d'un canal de signalisation.

En fonction de ceci, le recalage de tous les canaux de signalisation reçus s'effectue en apportant aux octets concernés un retard systématique équivalent à la durée de : 256-1 = 255 trames, soit la durée de 255 CS à la suite du recalage d'information, de façon que le contenu de ces canaux soit replacé dans les canaux de même rang à la multitrame suivante. Le retard total apporté par cette opération est également constant et égal à 64 ms sur la boucle complète, y compris la traversée du dispositif de recalage 1. C'est l'organe de retard 35, figure 2, qui effectue le recalage des signalisations ; il comporte de façon non représentée un registre à décalage de huit bits dont l'entrée est reliée à la sortie **SM** et dont la sortie est connectée à l'entrée de données d'une mémoire organisée en 16312 mots d'un bit ; les adresses de cette mémoire sont fournies par un compteur modulo 16312. La sortie de la mémoire est reliée à l'entrée d'un registre à décalage de huit bits dont la sortie est reliée à une deuxième borne d'entrée du commutateur 40. Un bus de commande CO issu du circuit 31 commande selon les séquences adéquates, par chacun de ses 4 conducteurs, chacun des quatre éléments précités, internes à l'organe de retard 35 afin d'adapter les débits binaires des canaux CS entre le multiplex et la mémoire. Pour plus de précisions sur le système à une boucle décrit ci-dessus, on peut se reporter au brevet français 2 526 614 déjà cité, incorporé par référence dans la présente description.

La présente invention permet d'augmenter notablement la capacité du système en adoptant un système architecturé en plusieurs boucles, ces boucles pouvant rester indépendantes et identiques à la boucle décrite ci-dessus quant au mode de fonctionnement et à la technologie utilisés ou interconnectées entre elles de toutes les façons souhaitées de façon qu'entre autres possibilités, un utilisateur donné dans le système puisse communiquer avec n'importe quel autre utilisateur du système.

Pour permettre l'interconnexion entre boucles, au moins un organe central, appelé superpilote, est traversé par chacune des boucles.

Pour améliorer la sécurité du système, on peut prévoir plusieurs superpilotes identiques parmi lesquels, en fonctionnement, un seul est actif, les autres étant à l'état de veille et donc transparents vis à vis des multiplex qui les traversent.

La figure 5 représente 4 boucles B1, B2, B3, B4, analogues à la boucle 10 de la figure 2. Chaque boucle comporte un certain nombre de concentrateurs, référencés 45, ce nombre pouvant atteindre plusieurs dizaines. Chaque boucle traverse selon un sens déterminé repérable par les bornes d'entrée et de sortie, un organe centralisé dénommé superpilote 46 qui comporte le dispositif de recalage d'informations selon l'invention. Les bornes d'entrée E1 et de sortie S1 de la boucle B1, par exemple, sont analogues aux bornes 12 et 11, respectivement, de la figure 2.

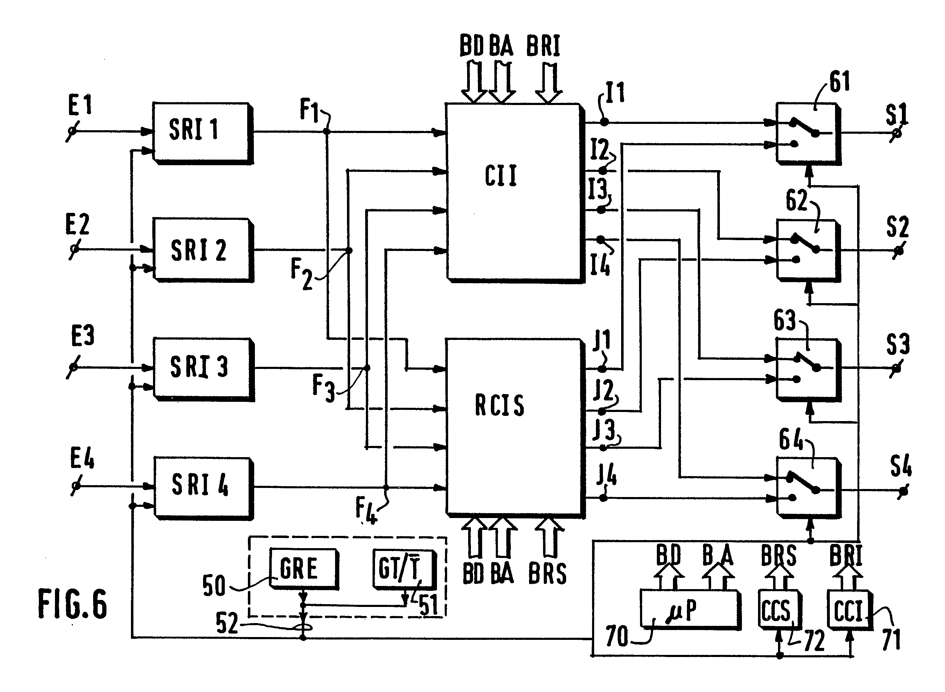

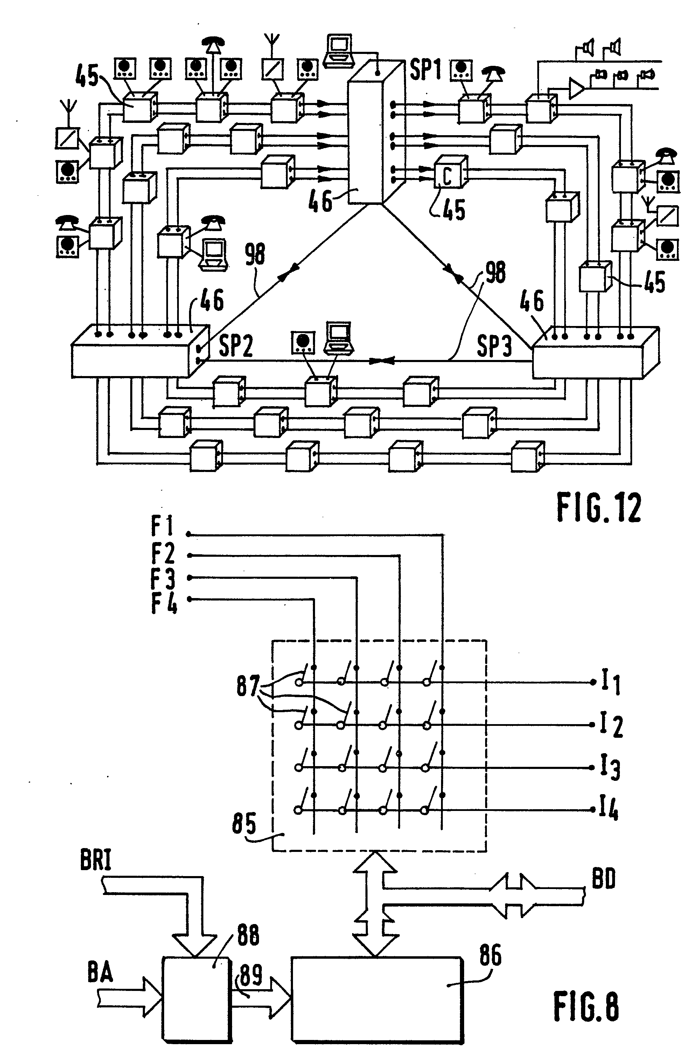

Le schéma synoptique du dispositif de recalage d'information pour plusieurs boucles, contenu dans le superpilote 46 est représenté à la figure 6 où l'on retrouve les entrées E1, E2, E3, E4 et les sorties S1, S2, S3, S4 des 4 boucles de la figure 5. Chaque entrée est reliée à un organe de recalage d'information et de synchronisation SRI1, SRI2, SRI3, SRI4, qui a pour fonction d'établir un retard d'une trame, soit 250 μs, entre le multiplex sortant en S1, S2, S3, S4 et la borne de sortie correspondante F1, F2, F3, F4 de chaque SRI (sorties F). On notera que les multiplex temporels des différentes boucles sont identiques entre eux et par exemple tels que décrits en référence aux figures 1a et 1b. D'autre part, les multiplex en S1, S2, S3, S4 sont synchrones et par voie de conséquence, synchrones aussi en F1, F2, F3, F3, ceci étant une condition nécessaire à la mise en oeuvre de l'invention, alors qu'il y a asynchronisme des multiplex temporels sur les entrées E1 à E4. Le schéma synoptique d'un organe de recalage d'information et de synchronisation est décrit ci-dessous en référence à la figure 7. Par exemple, chaque SRI est tel que décrit en référence à la partie gauche de la figure 2 (éléments 20, 21, 31, CA et **MEM**). Pour économiser de la place mémoire on peut utiliser la structure de SRI décrite en référence à la partie gauche de la figure 3 du brevet français précité 2 526 614, partie comprise entre la borne 12 et la sortie **SM**. Cette structure permettant d'économiser de la place mémoire, est remarquable en ce que l'ensemble de mémorisation, équivalent de la mémoire **MEM** à la figure 2 de la présente demande, est formé de "n" (n>1) mémoires dont la capacité de chacune est suffisante pour contenir une trame, le nombre de trames formant une multitrame étant plus grand que n et en ce qu'il est prévu des moyens pour éviter qu'une même mémoire soit sollicitée en même temps par le circuit de lecture et le circuit d'écriture.

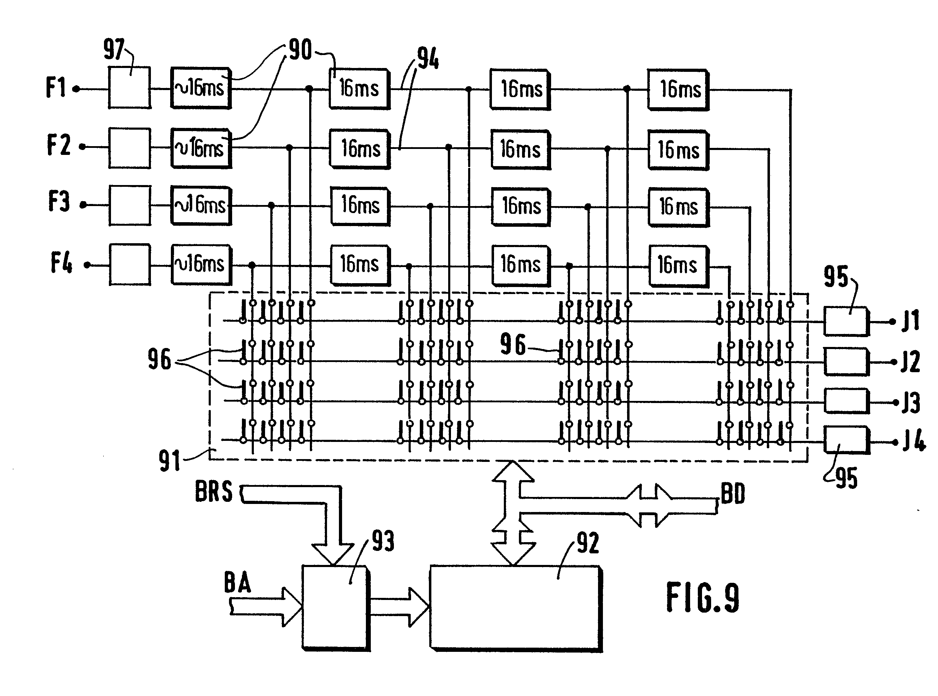

Chaque SRI reçoit d'un générateur de rythmes d'émission GRE, 50, (fig.6) et d'un générateur de code de trame T et de multitrame $\overline{T}$, GT/$\overline{T}$, 51, munis d'un oscillateur à quartz, les signaux nécessaires à son fonctionnement, sur un conducteur multiple 52 qui comporte entre 25 et 30 conducteurs, ces signaux pouvant être considérés comme des signaux d'horloge. Les bornes F1, F2, F3, F4 sont reliées à autant d'entrées d'un organe CII et, parallèlement, à autant d'entrées d'un organe RCIS. CII est un organe de Commutation Interboucle d'Information. Il n'introduit aucun retard sur les signaux qui le traversent ; il est constitué pour l'essentiel par une matrice de commutation carrée, en l'occurrence à 4 lignes et 4 colonnes, soit 16 points de croisement comportant chacun un interrupteur, et sa fonction est de réaliser toutes les interconnexions désirées entre boucles pour les canaux d'information CI, canal par canal. L'organe CII est décrit ci-dessous en référence à la figure 8 ; ses sorties I1, I2, I3, I4 sont reliées respectivement à la première borne de circuits de combinaison, en l'occurrence de commutateurs à deux positions 61, 62, 63, 64 dont la borne commune est reliée à la sortie S1, S2, S3, S4, respectivement et qui est commandé à partir du conducteur multiple 52. RCIS est un organe de Recalage et de Commutation Interboucle de Signalisation. Sa fonction, double, consiste d'une part à recaler les canaux de signalisation CS des multiplex entrants sur les multiplex sortants et aussi à réaliser toutes les interconnexions désirées entre boucles pour les canaux de signalisation CS. Il faut noter qu'en général un canal de signalisation est affecté à un canal d'information, leurs numéros d'ordre respectifs n'étant pas nécessairement les mêmes mais, dans ce cas, les interconnexions interboucles réalisées pour le canal d'information et le canal de signalisation sont les mêmes, en ce sens que les mêmes boucles élémentaires formant la multiboucle sont parcourues par les canaux CI et les canaux CS, mais ces configurations sont réparties dans le temps avec une périodicité et un facteur de forme différents. L'organe RCIS qui constitue le coeur de l'invention, comporte un ensemble d'organes de retard associé à une matrice de commutation, de préférence à 4 lignes et 16 colonnes, soit 64 points de croisement comportant chacun un interrupteur. L'organe RCIS est décrit ci-dessous en référence à la figure 9 ; ses sorties J1, J2, J3, J4 sont reliées respectivement à la deuxième borne des commutateurs 61, 62, 63, 64, dont les séquences de commutation pour transmettre un bit de canal d'information ou un octet de canal de signalisation sont commandées à partir du bus de commande de rythmes d'émission 52.

De préférence, la commande de fermeture-ouverture d'interrupteurs dans les organes CII et RCIS s'effectue, de façon souple, par des moyens informatiques qui sont représentés schématiquement à la figure 6. Il s'agit d'un microprocesseur μP, 70, par exemple du type 68000 fabriqué par la société américaine MOTOROLA, dont le bus de données BD et le bus d'adresses BA est relié aux organes CII et RCIS, d'un compteur de canaux d'information CCI, 71, commandé par le conducteur 52 dont le bus de sortie BRI est relié à l'organe CII et d'un compteur de canaux de signalisation CCS, 72, commandé par le conducteur 52 et dont le bus de sortie BRS est relié à l'organe RCIS.

A la figure 7 est schématisé un organe d'entrée SRI du dispositif de recalage. Cet organe effectue le recalage de toutes les informations du multiplex de la boucle qui le traverse et notamment le recalage des canaux CI en établissant entre les sorties S1, S2, S3, S4 du dispositif et la sortie F du SRI considéré un retard égal à la durée d'une trame, soit 8 trames de base. L'organe SRI comporte une mémoire d'information 80 qui reçoit, par l'intermédiaire d'éléments tampons 81 et 82, respectivement les données d'un multiplex temporel d'une boucle élémentaire sur son entrée E et les signaux issus du conducteur multiple 52 qui constituent les rythmes d'émission et servent à effectuer la synchronisation déjà décrite ci-dessus. Pour remettre les données reçues en phase avec la base de temps émission, la mémoire 80, constituée de boîtiers RAM, mémorise temporairement trame de base par trame de base le multiplex reçu avant de le restituer en phase avec les rythmes d'émission. Cette mémoire est donc adressée, en écriture, par les rythmes de la base de temps réception, et adressée en lecture par les rythmes de la base de temps émission. De préférence, pour concilier le diagramme des temps du multiplex reçu et celui des accès de mémoires, il est avantageux de démultiplexer, dans un démultiplexeur 83, les bits reçus en E deux par deux, de façon à mémoriser deux bits à chaque adresse mémoire. Un circuit de multiplexage 84, en sortie de la mémoire 80, commandé par les signaux sur le conducteur 52 ordonne ensuite les bits de sortie de la mémoire 80 et fournit ainsi à sa sortie le signal d'informations recalées sur la borne F. Chaque circuit SRI se comporte comme une ligne à retard permettant de garantir toujours le même temps de tansit d'une trame, soit 8 trames de base ($t_{10}$ = 250 $\mu$s) dans chaque boucle, quel que soit le nombre d'équipements (évolutif) insérés dans la boucle qu'il contrôle.

A la figure 8, le commutateur interboucle d'information, CII, est constitué pour l'essentiel par une première matrice de commutation 85 et par une première mémoire de commutation 86. Les colonnes de la matrice 85 sont reliées aux bornes F1, F2, F3, F4 et les lignes aux sorties I1, I2, I3, I4 de l'organe CII. A chaque point de croisement de la matrice est symbolisé un interrupteur 87, chaque interrupteur permettant la liaison ou la déconnexion d'un fil de colonne avec un fil de ligne. Une configuration de commutation entre boucles est réalisée lorsqu'un commutateur par ligne et un seul est fermé. Les durées de fermeture des interrupteurs pour une configuration donnée sont espacées, en concordance avec les retards apportés par les organes SRI insérés dans la multiboucle considérée. Ces configurations sont obtenues à partir de la mémoire 86 activée en lecture, la durée de fermeture de chaque interrupteur étant celle d'un CI, soit un bit. La mémoire 86 contient au moins 240 emplacements dont chacun peut contenir plusieurs bits représentatifs d'une configuration de commutation de la matrice ; elle est inscrite dynamiquement à partir de bus de données bidirectionnel BD issu du microprocesseur 70, étant adressée en écriture selon un accès aléatoire par le bus d'adresses BA. La mémoire 86 est lue, à chaque temps de bit par pointage à partir du bus BRI issu du compteur de canaux d'informations CCI. Un circuit à logique prioritaire 88 rend compatibles sur un bus unique 89 l'accès des bus BA et BRI à la mémoire 86. La mémoire 86 est de préférence organisée en 256 mots de 16 bits ; pour chacune des 4 boucles réceptrices, un code de 4 bits détermine l'un des 4 signaux d'informations recalées en F à commuter.

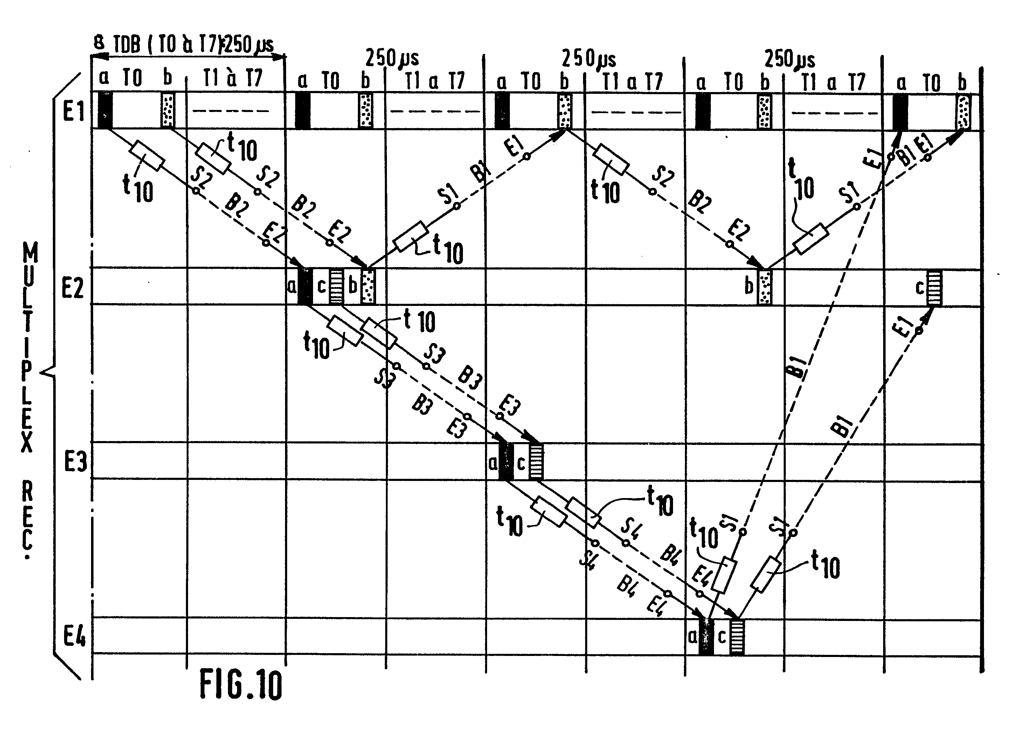

La fonction de commutation des canaux multiboucles d'information s'effectue de la façon suivante : un canal multiboucle d'information est caractérisé par l'occupation d'un canal d'information CI dans chacun des multiplex des boucles qu'il interconnecte, comme illustré à la figure 10. L'acheminement des informations au travers de 2, 3, ou 4 boucles, pour un canal donné est réalisé par le transfert en temps réel, d'une boucle à une autre, des données acheminées dans les voies temporelles attribuées à ce canal. Le rang des canaux d'information CI utilisés dans chaque multiplex pour supporter le canal d'information multiboucle est le même dans les boucles multiplexées concernées. La durée de l'interconnexion, (un ou plusieurs canaux CI adjacents) et le numéro du canal utilisé sont déterminés par le logiciel (microprocesseur 70). Le temps de transit des informations circulant dans les boucles interconnectées est un multiple du temps de transit $t_{10}$ sur une boucle, soit 500 $\mu$s pour deux boucles, 750 $\mu$s pour trois boucles et 1 ms pour 4 boucles.

La figure 10 montre des exemples de canaux d'information multiboucles. A chaque intervalle de temps IT (a, b, c) représentant un canal multiboucle dans la trame de base (T0), correspond une activation des premiers moyens de commande (86, 87, 88, BD, BA, BRI) qui provoque, par les fermetures successives des interrupteurs respectifs concernés, l'interconnexion voulue entre 2 (ITb), 3 (ITc) ou 4 (ITa) boucles.

L'organe RCIS de recalage et de commutation interboucle pour les canaux de signalisation représenté à la figure 9 comporte essentiellement des organes de retard 90, une deuxième matrice de commutation 91 et une deuxième mémoire de commutation 92. La mémoire 92 appartient à des moyens de commande analogues aux moyens de commande élaborés pour l'organe CII : cette mémoire est aussi inscrite à partir du bus de données BD avec adresse à accès aléatoire par le bus BA, par l'intermédiaire d'un circuit à logique prioritaire 93. La lecture de la mémoire s'effectue par pointage, à partir du bus BRS en provenance du compteur de canaux de signalisation CCS et relié à la mémoire 92, au rythme des durées de canaux CS. Chaque configuration de commutation, en 91 est maintenue, en ce qui concerne la fermeture de chaque interrupteur de la configuration, pendant la durée d'un canal CS, c'est-à-dire : soit pendant toute la durée de 7 trames de base successives qui ne contiennent pas l'octet final de synchronisation T, soit pendant les durées S des octets finaux de ces 7 trames de base.

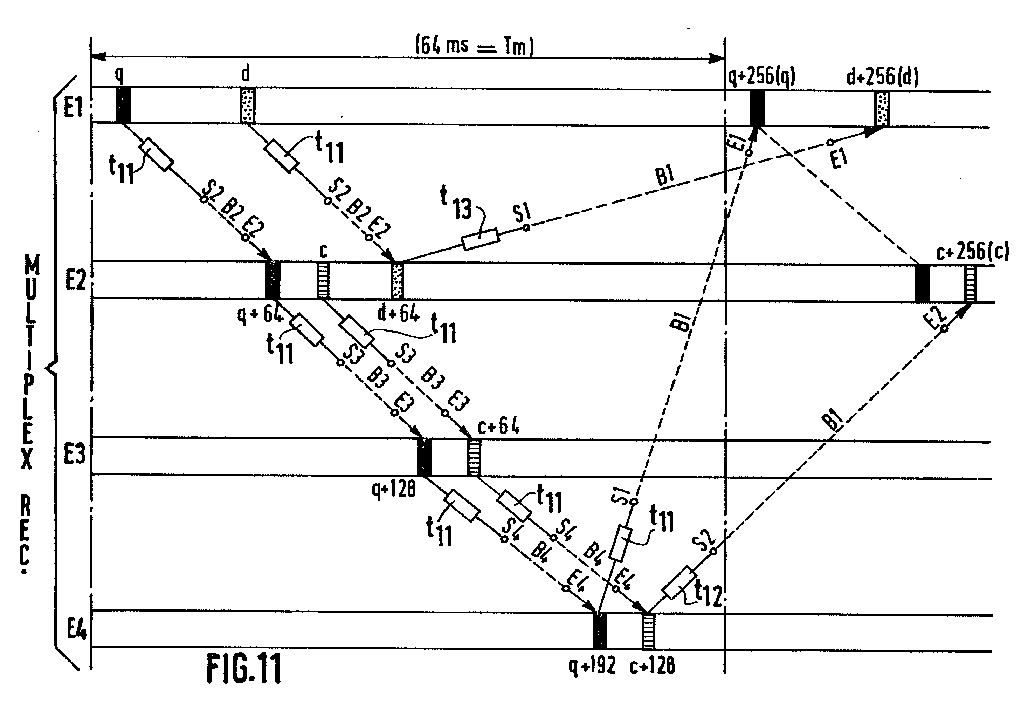

Chaque entrée F1, F2, F3, F4 de l'organe RCIS est reliée à une ligne de transmission qui comporte autant d'organes de retard 90 que de boucles, en l'occurrence 4. La sortie de chaque organe de retard est reliée à une colonne de la matrice 91 dont chaque ligne est reliée à une sortie J1, J2, J3, J4 de l'organe RCIS, de préférence par l'intermédiaire d'un registre à décalage de 8 bits 95. A chaque point de croisement de la matrice est symbolisé un interrupteur 96, chaque interrupteur permettant la liaison ou la déconnexion d'un fil de colonne avec un fil de ligne. La matrice 91 comporte 64 interrupteurs et, plus généralement, $p^3$ interrupteurs pour p boucles élémentaires. La mémoire 92 est par exemple organisée en 256 mots de 16 bits. Une configuration de commutation interboucle pour la signalisation est réalisée lorsqu'un commutateur par ligne et un seul est fermé pendant des intervalles de temps disjoints compatibles avec la circulation de l'information de signalisation à travers les boucles à interconnecter. D'autre part chaque interconnexion de boucles est effectuée, par le logiciel, de manière telle qu'une boucle multiple traverse, sur toute sa longueur, 4(p) et seulement 4(p) organes de retard 90, chacun de ces organes 90 apportant un retard égal au quart de la durée de la multitrame (16 ms), soit encore la durée moyenne de 4096 bits de signalisation (incluant les bits des codes T et $\overline{T}$). On notera que chaque ligne à retard d'entrée, à gauche sur la figure 9, apporte un retard de 4024 bits, compte tenu du fait qu'il convient d'ajouter à ce retard celui apporté par un registre d'entrée 97 de 8 bits, et celui apporté par l'organe SRI disposé en amont (8 octets de signalisation ou de code T/ $\overline{T}$). Les octets de signalisation contenus dans les signaux recalés des 4 boucles, en F1-F4, sont ainsi retardés globalement de 64 ms par les lignes à retard 90 comportant des prises intermédiaires à 16 ms ($t_{11}$), 32 ms ($t_{12}$) et 48 ms ($t_{13}$), voir figure 11. Ces lignes à retard sont réalisées par exemple avec des boîtiers mémoire RAM. La matrice de commutation 91 aiguille, pour chaque canal de signalisation, les octets de signalisation issus de l'une des 16 sorties possibles de lignes à retard, vers les multiplex sortants des 4 boucles. A chaque configuration de commutation correspond un mot de 16 bits de la matrice 92. Ce mot se décompose en 4 fois 4 bits, chaque code de 4 bits déterminant, pour chacune des 4 lignes de la matrice l'une des 16 sorties de lignes à retard à commuter.

La fonction de commutation des canaux multiboucles de signalisation s'effectue de la façon suivante : un canal multiboucle est caractérisé par l'occupation d'une voie temporelle de signalisation (canal CS) dans chacun des multiplex des boucles qu'il interconnecte. L'acheminement de signaux de signalisation au travers de 2, 3 ou 4 boucles, pour un canal donné, est réalisé par le transfert en temps réel, d'une boucle à l'autre, des données acheminées dans les voies temporelles attribuées à ce canal, comme cela apparaît à la figure 11 où l'on notera que les rangs des canaux CS, dans les multitrames des différentes boucles sont nécessairement différents. La durée de l'interconnexion et le rang du canal utilisé dans chaque multiplex sont déterminés par le logiciel de l'application. L'obtention d'un temps de propagation d'un canal de signalisation multiboucle identique à celui d'un canal de signalisation de boucle s'obtient par la structure et le fonctionnement particuliers de l'organe RCIS décrits ci-dessus. Chaque configuration de commutation est établie par le logiciel à partir de différents paramètres qui précisent les boucles à interconnecter et les points des lignes à retard 90 à commuter, pour chacun des canaux multiboucles concernés. Comme déjà indiqué ci-dessus, les aiguillages des canaux multiboucles sont établis de façon telle que le cumul des temps de transit dans chaque partie des lignes à retard traversées soit toujours égal à la durée Tm d'une multitrame (64 ms). La matrice de commutation 91 permet ainsi de créer des canaux multiboucles indépendants qui peuvent desservir les 2, 3 ou 4 boucles simultanément. Les canaux multiboucles de signalisation ont ainsi un temps d'accès identique à celui des canaux de boucle et peuvent être utilisés pour gérer les communications entre deux utilisateurs appartenant à deux boucles différentes ou plus de deux utilisateurs en cas de téléconférence par exemple, ce qui peut impliquer plus de deux boucles.

La figure 11 représente l'établissement de trois configurations de commutation de signalisation. Les lettres q, c et d symbolisent un nombre entier qui indique le rang d'un canal de signalisation CS dans un multiplex de boucle. On rappelle par ailleurs que les durées $t_{11}$, $t_{12}$ et $t_{13}$ sont respectivement égales à 16 ms, 32 ms, 48 ms. En lisant les lignes L de la matrice 91 du haut vers le bas et les colonnes C de la gauche vers la droite, la configuration repérée par q qui interconnecte les 4 boucles implique la fermeture successive avec un pas de 16 ms des interrupteurs L2-C4, L3-C3, L4-C2, L1-C1. La configuration c pour trois boucles implique la fermeture successive des interrupteurs L4-C2, L3-C3, L2-C5. La configuration d pour deux boucles B1 et B2, implique la fermeture successive avec des pas alternés de 16 ms et 48 ms des interrupteurs L2-C4, L1-C11.

Le choix des techniques de gestion des canaux multiboucles est lié aux spécifications d'attribution des canaux en fonction de leurs modes d'utilisation qui dépendent eux-mêmes des différents services à rendre pour un système donné. Ces spécifications doivent préciser par exemple :
- le nombre de canaux dédiés (à une application)
- le nombre de canaux affectés (dynamiquement ou non)
- le nombre de canaux en pools et le nombre des pools (téléconférences).

Dans le cas des canaux dédiés le superpilote 46 effectue, au moyen du microprocesseur 70 les commutations interboucles dès l'initialisation du système ce qui permet de disposer de canaux multiboucles permanents. Dans le cas où les canaux sont gérés en pool, la demande d'un canal multiboucle qui est adressée au superpilote par un concentrateur doit contenir l'information précisant les boucles à interconnecter. C'est à partir de cette information que le superpilote recherche les canaux disponibles dans le pool des multiplex concernés qui répondent aux caractéristiques nécessaires à l'interconnexion, ceci constituant l'attribution dynamique des canaux CI et des canaux CS. Lorsque les canaux demandés ont été trouvés, le superpilote réalise les commutations interboucles qui permettent la mise en oeuvre des canaux de signalisation et d'information multiboucles nécessaires et rend compte au concentrateur demandeur. Ainsi le concentrateur demandeur reçoit du superpilote les numéros des canaux multiboucles qui lui sont affectés pendant la durée de la communication interboucle. A l'inverse, en fin de communication, ces canaux sont libérés par le superpilote qui effectue les décommutations correspondantes. Le traitement par logiciel des commutations interboucles pour es canaux CI et CS permet ainsi une gestion dynamique et banalisée très souple pour l'établissement des communications dans le réseau.

La figure 12 montre l'architecture du système articulée autour de 3 stations superpilotes 46 (SP1, SP2, SP3) qui permettent l'interconnexion de 2 à 4 boucles, en l'occurrence trois boucles comprenant chacune jusqu'à 62 concentrateurs. Chaque boucle passe obligatoirement par les 3 points communs constitués par les 3 stations superpilotes grâce auxquelles les échanges d'informations entre les boucles sont possibles. Les équipements concentrateurs 45 insérés dans les boucles sont reliés en cascade par des supports de transmission identiques qui assurent les liaisons numériques nécessaires. Chaque utilisateur du système est relié à au moins un de ces concentrateurs et communique par l'intermédiaire d'une ou plusieurs boucles avec les autres utilisateurs, en fonction de leur répartition dans le réseau. Les signaux transmis sur les boucles sont, de préférence, codés en biphase ce qui permet de ne transmettre qu'un signal et d'utiliser indifféremment du câble coaxial ou de la fibre optique comme support de transmission de boucle. A ce sujet, on notera que ces supports de transmission sont doublés pour chaque boucle, à la figure 12, pour augmenter la sécurité de fonctionnement. En effet cette dernière disposition permet, en cas de coupure partielle (d'un support d'information) ou totale (les deux supports d'information) de boucles, d'effectuer automatiquement à partir d'un superpilote actif des reconfigurations de boucles. Les stations superpilotes assurent toutes les opérations de commutations temporelles qui permettent les échanges des messages de signalisation et l'établissement de liaisons d'informations en duplex total ou en semi duplex dans une même boucle ou entre plusieurs boucles. Des liaisons spécialisées 98 relient les 3 superpilotes ; elles permettent d'établir, en dehors des boucles, un dialogue direct entre ces trois équipements dont l'un est normalement actif, tandis que les deux autres sont en veille et prêts à prendre automatiquement le relais, l'un ou l'autre, en cas de défaillance du superpilote actif.

D'un point de vue technologique, les matrices de commutation 85 et 91 peuvent être réalisées de la façon suivante, par exemple à partir de composants de circuits intégrés fabriqués par la société américaine FAIRCHILD.
- pour les interfaces d'entrée et de sortie des matrices (colonnes, lignes, bus de liaison avec la mémoire de commutation) : bascules D du type F175
- pour la réalisation des interrupteurs, à raison d'un interrupteur fermé par ligne (1 parmi 4 ou 1 parmi 16) : combinaison à deux étages de circuits-portes NON-ET, F00 et F20.

Si l'on souhaite augmenter encore la capacité du réseau de communication décrit ci-dessus, deux possibilités d'extension sont offertes, qui ne modifient pas l'objet de l'invention.
- On peut augmenter le nombre de boucles en le portant par exemple de 4 à 8 (il est préférable d'adopter un multiple de 2 pour le nombre de boucles, ce qui simplifie la fabrication et l'agencement des organes de retard 90). Dans ce cas, on conserve de préférence le même multiplex que celui décrit ci-dessus, quant à sa structure et à sa vitesse.
- On peut aussi, en conservant par exemple 4 boucles, doubler la vitesse du multiplex en la portant à 64 kbits/s au lieu de 32 kbits/s, ce qui offre alors l'avantage supplémentaire de pouvoir transmettre de l'information numérique codée en MIC en plus du codage différentiel Δ, seul utilisé à 32 kbits/s.

Il est aussi à noter qu'outre les communications entre utilisateurs qui se traduisent par des configurations monoboucles ou multiboucles il est aussi possible, selon l'invention de faire de la diffusion de n'importe quel poste d'utilisateur vers n'importe quels autres.

## Revendications

1. Dispositif de recalage d'informations dans un système de communication à p boucles pour émettre dans une pluralité de p multiplex temporels sortants du dispositif des informations provenant d'une pluralité de p multiplex temporels entrants asynchrones, lesdits p multiplex temporels, identiques quant à leur configuration étant prévus pour des canaux à cadence rapide CI et des canaux à cadence lente CS, les canaux CI étant formés d'espaces de temps repérés dans une trame de base, tandis que les canaux CS sont formés d'espaces de temps distribués dans des trames de base successives et repérés dans une multitrame englobant une pluralité de trames de base, dispositif de recalage d'informations comportant p entrées de données des multiplex entrants E1, E2,..., Ep et p sorties de données S1, S2,..., Sp des multiplex sortants, caractérisé en ce que les p entrées de données sont reliées chacune à un organe SRI de synchronisation des p multiplex entrants et de recalage des informations des canaux CI, que les p sorties F des organes SRI sont reliées en parallèle à p entrées d'un organe CII de commutation interboucle pour les canaux CI muni d'une première matrice de commutation, et à p entrées d'un organe RCIS de recalage et de commutation interboucle pour les canaux CS muni d'organes de retard et d'une deuxième matrice de commutation, et que p sorties d'informations de l'organe CII sont appariées respectivement à p sorties d'informations de l'organe RCIS, chaque paire de sorties respectives étant reliée à une première et une deuxième borne d'entrée d'un circuit de combinaison, à raison de p circuits de combinaison qui fournissent à leurs sortie S1, S2,..., Sp, lesdits p multiplex sortants en synchronisme.

2. Dispositif de recalage d'informations selon la revendication 1, caractérisé en ce que ledit organe CII de commutation interboucle pour les canaux CI reçoit, à partir de premiers moyens de commande, des signaux de commande qui, pour chaque canal CI, établissent une configuration de commutation interboucle d'information qui est répartie dans le temps selon les boucles à interconnecter et telle que sur chaque ligne de ladite première matrice de commutation reliée à l'une desdites p sorties de CII, un interrupteur et un seul soit fermé.

3. Dispositif de recalage d'informations selon la revendication 2, caractérisé en ce que lesdits premiers moyens de commande sont constitués par une première mémoire de commutation, contenant les configurations de commutation interboucles pour les canaux CI activées lors de sa lecture, qui est inscrite à partir d'un bus d'adresses BA et d'un bus de données BD reliés à un microprocesseur central et qui est lue à partir d'un bus BRI relié à un compteur de canaux CI, CCI.

4. Dispositif de recalage d'informations selon la revendication 1, 2 ou 3, caractérisé en ce que chacune des p entrées dudit organe RCIS de recalage et de commutation interboucle pour les canaux CS est reliée à une ligne qui comporte p organes de retard en série, et que la sortie de chaque organe de retard est reliée à une colonne de ladite deuxième matrice de commutation dont chaque ligne est reliée à l'une des p sorties de RCIS.

5. Dispositif de recalage d'informations selon la revendication 4, caractérisé en ce que ledit organe RCIS reçoit, à partir de deuxièmes moyens de commande des signaux de commande qui, au moins pendant la durée des espaces de temps disjoints successifs S qui constituent chaque canal CS, établissent une configuration de commutation interboucle de signalisation qui est répartie dans le temps selon les boucles à interconnecter et telle que, sur chaque ligne de ladite deuxième matrice de commutation, un interrupteur et un seul soit fermé, en prenant en compte dans les multiplex le décalage de rang des différents canaux CS utilisés pour ladite configuration, la somme des intervalles de temps résultant desdits décalages de rang étant égale à la durée de multitrame des multiplex.

6. Dispositif de recalage d'informations selon la revendication 5, caractérisé en ce que lesdits deuxièmes moyens de commande sont constitués par une deuxième mémoire de commutation, contenant les configurations de commutation interboucles pour les canaux CS activées lors de sa lecture, qui est inscrite à partir d'un bus d'adresses BA et d'un bus de données BD reliés à un microprocesseur central et qui est lue à partir d'un bus BRS relié à un compteur de canaux CS, CCS.

FIG.1a

FIG.1b

**FIG. 2**

**FIG.3**

**FIG.4**

FIG.5

FIG.7

FIG.6

4-Ⅷ-PHF 88-607

**FIG.12**

**FIG.8**

FIG.9

EP 0 364 022 A1

FIG.10

FIG.11

EP 0 364 022 A1

8-VIII-PHF 88-607

MULTIPLEX REC.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 093 479 (T.R.T.)<br>* Page 1, lignes 1-15; page 3, ligne 12 - page 4, ligne 22; page 5, ligne 19 - page 6, ligne 31 * & FR-A-2 526 614 (Cat. D)<br>--- | 1,2 | H 04 L 12/28 |
| Y | PROCEEDINGS OF THE CONFERENCE ON COMPUTER COMMUNICATIONS, IEEE INFOCOM'87, San Francisco, CA, 31 mars - 2 avril 1987, pages 320-326, IEEE, New York, US; F. BORGONOVO et al.: "HR4-net: A hierarchical random-routing reliable and reconfigurable network for metropolitan area"<br>* Page 322, lignes 1-54 *<br>--- | 1,2 | |
| A | US-A-3 796 835 (CLOSS et al.)<br>* Colonne 1, ligne 59 - colonne 2, ligne 25; colonne 3, ligne 13 - colonne 4, ligne 17; colonne 6, ligne 36 - colonne 7, ligne 29; colonne 7, ligne 49 - colonne 8, ligne 23 *<br>--- | 3-6 | DOMAINES TECHNIQUES RECHERCHES (Int. Cl.5) |
| A | US-A-3 755 789 (COLLINS)<br>* Colonne 5, lignes 26-50; colonne 11, ligne 46 - colonne 12, ligne 65 *<br>----- | 3-6 | H 04 L |

Le présent rapport a été établi pour toutes les revendications

| Lieu de la recherche | Date d'achèvement de la recherche | Examinateur |
|---|---|---|
| LA HAYE | 04-12-1989 | VAN DEN BERG,J.G.J. |